# EUROPEAN PATENT APPLICATION

(11) **EP 4 095 578 A1**
(43) Date of publication of application: **30.11.2022**
(21) Application number: 21305683.1
(22) Date of filing: 26.05.2021
(51) Int. Cl.: G02B 6/44, G02B 6/50, G02B 6/38

(54) **FIBER OPTIC SPLIT AND QUICK CONNECTING DEVICE FOR SUBMARINE CABLES**

(71) Applicant: Nexans, 92400 Courbevoie (FR)
(72) Inventor: ROD, Alf Erik, 1788 Halden (NO); SKAUG, Alte, 0584 Oslo (NO); SANGAR, Robin Kumar, 1445 Drobak (NO)
(74) Representative: Ipsilon

(57) **Abstract**

A joint (101, 301) for splicing Fiber Optic cables in a subsea environment is disclosed. The joint (101, 301) is configured with a housing (102) for plurality of jumper cables (103) within the housing (102). The jumper cables (103) are connected to an interface (105), configured to interface with plurality of connectors (104). The jumper cables (103) and connectors (104) facilitate splicing or splitting of the Fiber optic cables into split type, branch type system of cables. The embodiments herein provide a solution to plug and play different connectors with FO cables to achieve different permutations of split FO cables.

## Description

### FIELD OF THE INVENTION

The present invention relates to Fiber Optic (FO) cables for subsea application, and more specifically to splicing of FO cables using joints and connectors.

### BACKGROUND

Fiber Optic (FO) cables are used in wide range of applications in subsea environment that include submarine applications, oil and gas to name a few. Submarine power cables and other umbilical's and pure FO cables today usually have fiber optical elements included in the design. In these applications, there is always a need to splice optical cables or to combine FO cables.

For this purpose, existing systems use connectors and joints to combine or splice the cables to form a complex FO cable system. The connectors used in such systems are usually pin and socket type, or two mate-able type units.

Prior art WO2002017440 relates to a pin and socket type, wet-mateable connector for making electrical and fiber-optic cable connections in a harsh environment, such as an underwater or deep-sea environment. However, this does not address the solution to splicing of optical fibers.

Prior art EP3177954 relates to connection of equipment used in subsea operations, such as equipment used in the subsea oil and gas industry as well as telecommunications, to shore based stations or other remote systems, and is particularly concerned with a subsea electrical, optical, or electro-optical connector unit with a built-in data collection and communication system. This prior art does not disclose splicing or bridging of fibers.

Another prior art AU2018100129 relates to a hybrid optical-electrical cable assembly for connecting a base station (BS) to remote radio heads (RRHs). The hybrid optical-electrical cable assembly has a breakout enclosure and uses jumper cables for connection. But does not address the solution of splicing fiber optic cables.

Further, these existing connectors can only connect combined fiber optical element of multiple fibers to another combined fiber optical element. 1 to 1 system Principle. Whereas, in splicing of FO cables for example, you want to splice one optical element of multiple fibers into several optical element of multiple fibers 1 to 2 system, or 1 to 3 system and so on. Then you must add a joining cable with multiple FO connectors and joint box or like to try and replicate the system found on HV split/branch joint. This requires manual splicing FO joints every time a cable is spliced or changed. This poses challenges in an offshore scenario, where special skilled personal are required to perform the operation. Further, the process is cumbersome and time consuming. It increases the cost of components in the system and yet does not meet the possibility to change FO routing between the cables without re-splicing inside a joint box.

The aforementioned connectors do not offer easy to use, plug and play type of system that allows splicing of cables without additional complexity and added costs. As a result, there is a need for a simpler system for splicing FO cables.

### SUMMARY

The object of the invention is to provide a joint for splicing or splitting of fiber optic cables in a subsea environment. The joint comprises a housing providing an airtight and/or water tight environment. The housing encloses one or more jumper cables within and where the jumper cables are connected to fiber optic cables at both the ends to facilitate splicing or bridging of fiber optic cables.

A jumper cable is a length of cable configured to interconnect two components. In the context of this invention, the cable is a fiber optic cable and the jumper cables are fiber optic jumper cables. The jumper cable may comprise at either end connectors that allow it to be quickly connected to the desired equipment, such as a connector or interface.

Further, the joint is also provided with an interface to support connectors to be connected to both the ends to splice the FO cables. In an embodiment of the invention, the connectors may be Multi Fiber Push type (MNO) connector and may be employed in several applications not limited to subsea, wind turbine, land cables and so on.

In an object of the invention, joint is further provided with bulkhead on both the sides to interface the connector to the fiber optic cables. The bulkhead is provided with an enclosure similar to a cover, to cover the connector when there is no connection between the connector and the fiber optic cables. The joint facilitates various possible combinations and permutations of splicing of the fiber optic cables which are further discussed in detail in the detailed description.

Another object of the invention is to provide a system for splicing or bridging of fiber optic cables in harsh environments other than subsea applications. These and other technical details are further discussed in detailed description.

### BRIEF DESCRIPTION OF THE DRAWINGS

The present invention is illustrated in the accompanying drawings, throughout which reference letters indicate corresponding parts in the figures. The invention will be described in further detail with reference to the drawings 1-5, wherein:
Figure 1 illustrates a joint for splicing fiber optic cables, according to an embodiment of the present invention;
Figure 2 illustrates a detailed view of the joint of figure 1 and its connection to the jumper cables, according to an embodiment of the present invention;
Figure 3a illustrates splicing of fiber optic cables into split type cable system, according to an embodiment of the present invention;
Figure 3b illustrates a sectional view of the split type of fiber optic cable system, according to an embodiment of the present invention;
Figure 4 illustrates splicing of fiber optic cables into branch type cable system, according to an embodiment of the present invention;
Figure 5 illustrates a bulkhead interface for the joint, according to an embodiment of the present invention; and
Figure 6 illustrates different bulkhead connectors for the joint, according to an embodiment of the present invention.

The drawings are illustrated as an example, to demonstrate the objective technical problem solved by the invention and do not construe to limit the invention.

### DETAILED DESCRIPTION OF THE INVENTION

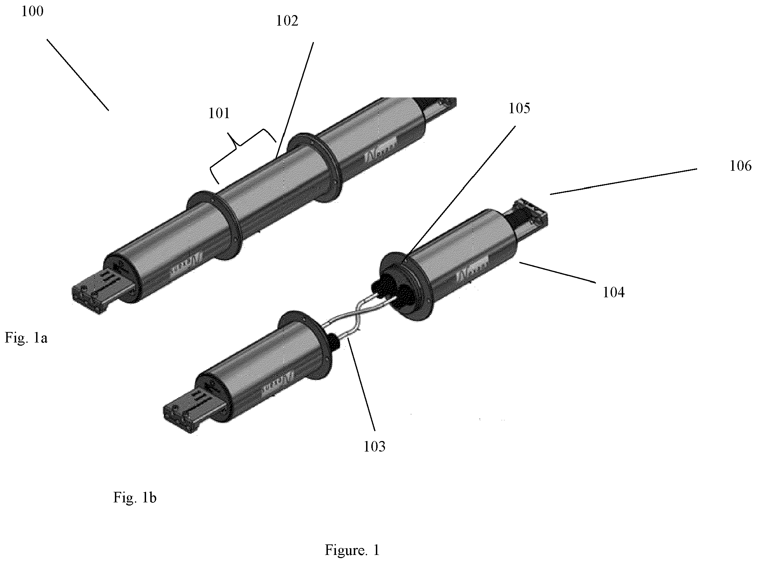

Figure 1 illustrates a joint 101 for splicing fiber optic cables, according to an embodiment of the present invention. As indicated in 1a and 1b is a Fiber Optic (FO) cable system, where a group of fiber optic cables are required to be spliced or split into a desired number of FO cables system. The FO cable system 100 as referred in figure 1a herein is provided with a joint 101, enclosed within a housing 102. The housing 102 provides an airtight/water tight environment for the joint 101. Inside the housing 102 there are arranged a plurality of jumper cables 103 for performing splicing of the FO cables. The example as in figure 1 demonstrates a set of two jumper cables 103 to function as a straight joint between FO cables 106.

The jumper cables 103 are connected to an interface 105 that further allows to connect to several connectors 104 to facilitate splicing operation of FO cables 106. In an example, the interface may be a bulkhead interface 105.

The use of jumper cables 103 allow for easy plug and play for splicing FO cables and does not require any special operation for installation. This is especially useful in harsh environments such as subsea, windfarms and oil and gas applications.

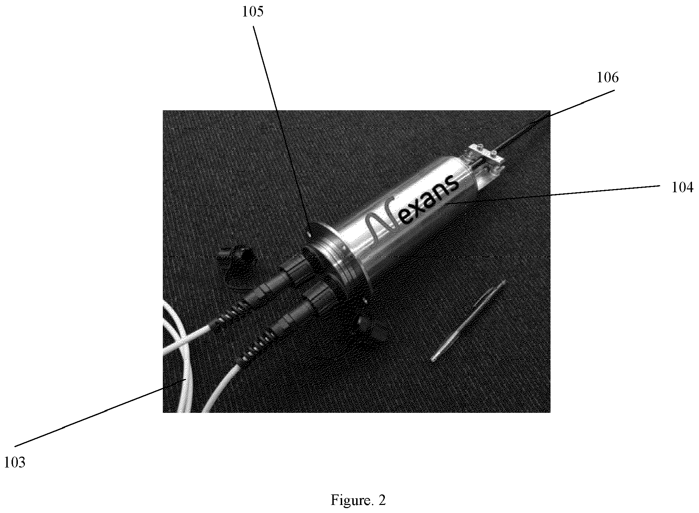

Figure 2 illustrates a detailed view of the joint of figure 1 and its connection to the jumper cables, according to an embodiment of the present invention. The inside view of the joint 101 shows two jumper cables 103 which are arranged within the housing 102 in figure 1. The jumper cables 103 are connected to bulkhead interface 105 which in turn connects to a connector 104. In this example, the connector 104 is a GPJ (General Purpose joint) 104, where one end interface section, called bulkhead, has been replaced by an interface section for MPO (Multi-fiber Push On) connectors. Further, different types of connectors can be connected to the bulkhead interface 105 as per the requirements to splice to FO cables 106.

In an embodiment according to the invention, say we want to splice a 48 FO cable system into smaller FO cables system of: 24^{∗}2, then the joint 101 comprises two jumper cables 102 which are connected through two sets of GPJ connectors 104. The FO cables (48 fiber cables system) are connected through the housing 102 into the joint 101. Inside the joint 101 the FO cables are interfaced with two jumper cables 103. The jumper cables 103 further interface to bulkhead interface 105 to a second GPJ connector 104. Thus, forming 2 sets of 24 spliced cables in the connector each. In other embodiments there may be other permutations for splicing the FO cables, for example 12^{∗}4, 8^{∗}6, etc. Other numbers of fibers may be possible, for example 96 fibers in a 96 FO cable which can be split and spliced into different permutations.

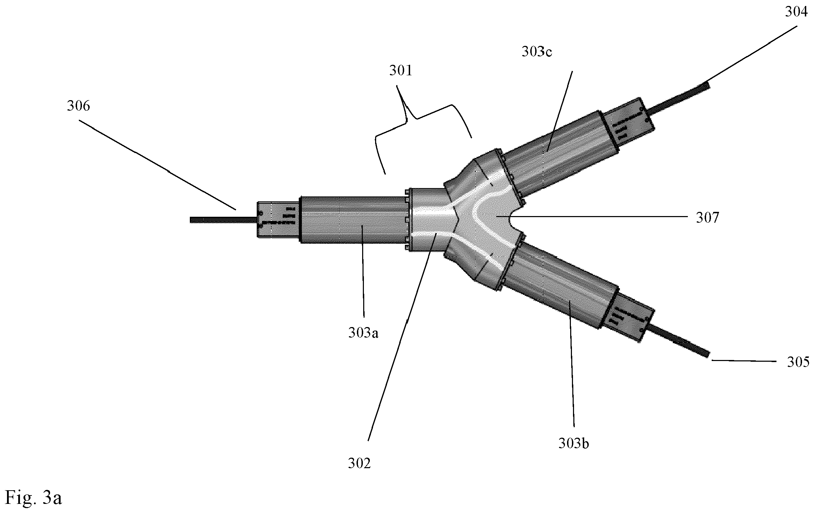

Figure 3a illustrates splicing of fiber optic cables into split type cable system, according to an embodiment of the present invention. As shown, one FO cable system 306 is split into two sets of FO cable systems 304, 305. The FO cable 306 is connected via a first connector 303a, then connector 303a is configured to be connected to a split type of joint 301. The FO cables 306 are passed through the joint 301 to interface to three sets of jumper cables 302. The joint comprises a housing 307 enclosing the joint and the jumper cables 302 which are arranged within the housing. This interface section may be a bulkhead interface. The joint 301 comprising the three sets of jumper cables 302 are interfaced with two connectors 303b and 303c on each side of the joint leading to the connectors 303b, 303c respectively. Further, connectors 303b and 303c split the FO cables 306 into two sets of FO cables system 305 and 304 respectively. A total of three GPJ connectors 303a, 303b and 303c are connected to the joint 301 comprising jumper cables 302 to form the split type of cable system.

In another embodiment, several jumper cables 302 and connectors 303 may be used to further split the FO cable system as desired into different split type combinations. This allows easy to extend plug and play type of system which can accommodate any desired number of split systems.

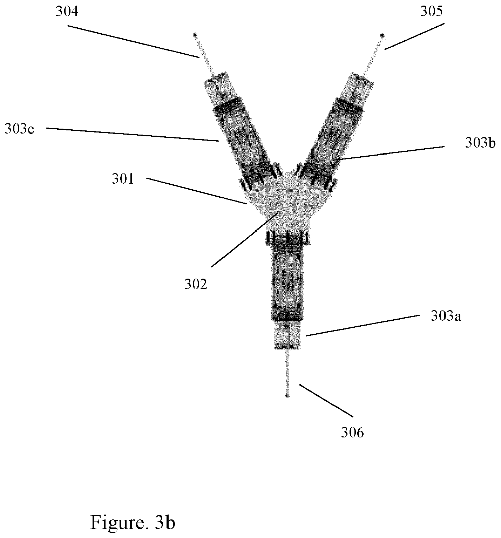

Figure 3b illustrates a sectional view of the split type of fiber optic cable system, according to an embodiment of the present invention. Figure 3b illustrates a more detailed view of the split type FO cable system of figure 3a. The FO cables 306 which are to be spliced or split are connected to a connector 303a and then pass through a joint 301 by means of sets of jumper cables 302 (not shown). The joint 301 is further interfaced to the two connectors 303b and 303c to form a split type FO cable system. This sectional view shows the joint 301 is enclosed in an airtight environment by connecting airtight environment to the connectors by means of bolts and nuts. In other embodiments, various other sealing mechanisms may also be employed to connect the joint with the jumper cables 302 inside them. Examples of other sealing mechanisms include pin and socket type, mate-able pins, and so on.

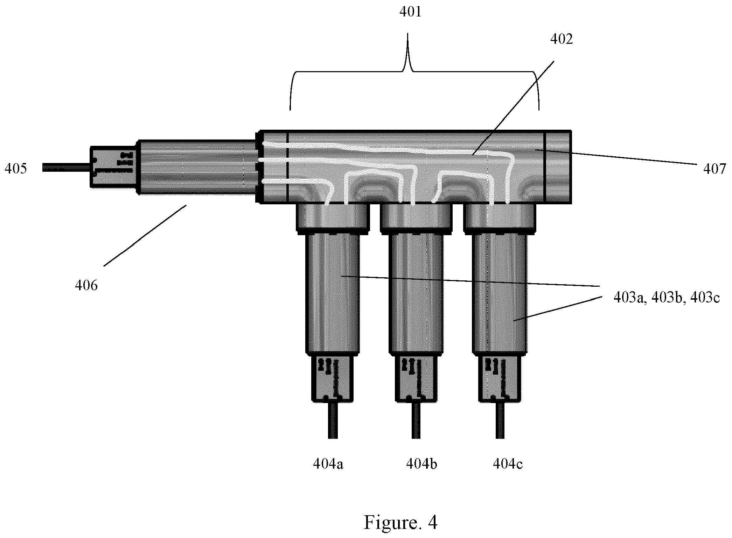

Figure 4 illustrates splicing of fiber optic cables into branch type cable system, according to an embodiment of the present invention. This arrangement allows splicing FO cable system 405 into three branches 404a, 404b, 404c as depicted. The FO cable system 405 that is to be spliced is configured to be connected to a GPJ connector 406 and subsequently to a joint that is a branch type of joint 401. The joint 401 comprises a housing 407 and is configured with several jumper cables 402 within the housing 407 and interfaced to three GPJ connectors 403a, 403b and 403c. The FO cables 405 pass through the joint 401 into the connectors 403a, 403b and 403c and are split at the connector 403a, 403b, 403c into the three sets of FO cables 404a, 404b and 404c.

In an embodiment of the invention, the number of branches can be extended by employing plurality of GPJ connectors 403 (403a, 403b.. 403n) and jumper cables 402 in combination. For example, there may be five branch type of connectors 403a, 403b, 403c, 403d, 403e to branch the FO cable system 405 into five sets of FO cables 404a, 404b, 404c, 404d, 404e.

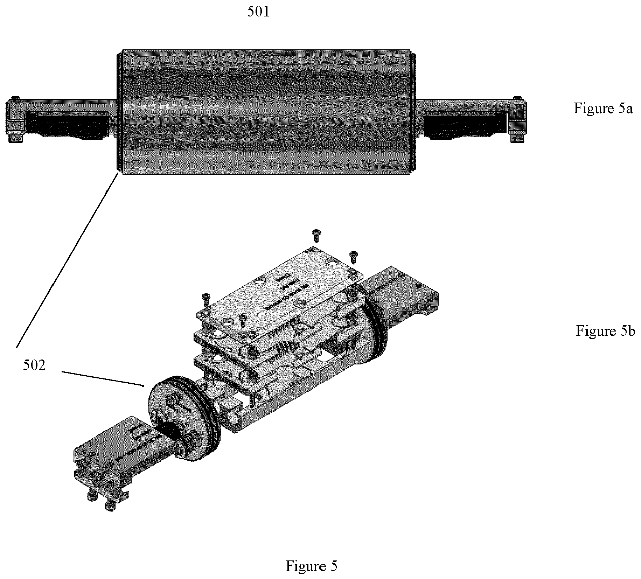

Figure 5 illustrates how a bulkhead interface is arranged in the joint, according to an embodiment of the present invention. 5a illustrates a GPJ connector 501 and 5b illustrates an expanded view of the connector with an internal view of the bulkhead interface 502. As depicted, this type of joint has bulkhead 502 with three input and three output ports which allow to splice up to 96 fiber cables in total. In another embodiment of the invention, different types of bulkheads with different numbers of input/outputs may be used to splice the FO cables as desired. The joint 501 and the bulkhead interface 502 may be used for splicing pre-terminated and terminated FO cables.

By replacing one bulkhead 501 for passing the FO cable with an MPO connector, the cables can be pre-terminated and the MPO interface may be used for testing and monitoring during flushing and installation of cables. The present solution may also be used for windmills and platforms not limiting to offshore applications only.

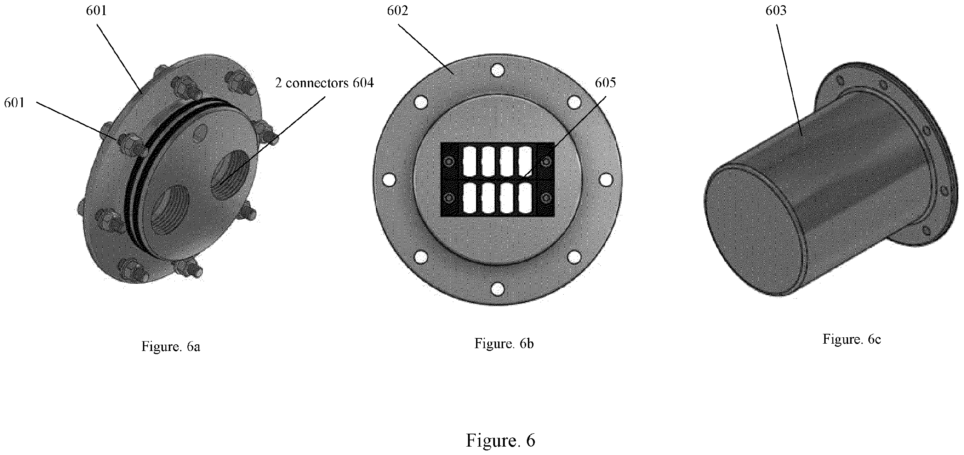

Figure 6 illustrates different bulkhead connectors for the joint, according to an embodiment of the present invention. Figures 6a and 6b are different bulkhead interfaces 601, 602 and 6c shows an enclosure or a cover 603 for such a bulkhead interface. An MPO bulkhead 601 configured for two ports 604 is shown in 6a. The MPO bulkhead 601 is provided with bolts and nut arrangement 606 for connecting the interface 601 to the joint. In another embodiment of the invention, various other mechanisms may be employed for connecting the bulkhead interface 601 to the joint such as snap fit, pin and socket etc.

The bulkhead 602 in 6b is configured to accommodate eight ports 605 for connecting to jumper cables in total. The connector may be one of: MPO connectors, IP 68 connectors and so on. As shown in 6b the bulkhead interface 602 is configured with slot of connectors 605 in the center of the interface 602. The slot may accommodate eight set of MPO connectors 605. The interface 602 facilitates several connectors 605 to be connected to form a FO system as desired.

An enclosure or a lid type cover 603 is shown in 6c. This enclosure 603 is used to protect the bulkhead interface 502 when the joint is not interfaced with the connector. In an example, during installation of the FO cables, transporting, storage etc. The enclosure is a cylindrical structure which fits onto the interface on the bulkhead to provide a closing of the interface. This also protects the interface from rust, dust and other dirt during transporting, installation.

The embodiment as described herein are preferred embodiments, however a person with ordinary skill in the art will recognize that the embodiments can be practiced with modifications within the spirit and scope of the invention as described herein.

## Claims

1. Joint (101, 301) for fiber optic cables in a subsea environment, the joint (101, 301) comprising:
a housing (102),
a plurality of jumper cables (103) enclosed within the housing (102);
wherein the jumper cables (103) are configured to be connected to fiber optic cables (106) at both the ends to facilitate splicing of the fiber optic cables (106).

2. The joint (101, 301) as in claim 1, wherein the housing (102) provides an airtight and/or water tight environment for connection of the jumper cables (103) to the fiber optic cables.

3. The joint (101, 301) as in claim 1, wherein the joint (101, 301) is configured to be connected to at least one connector (104) via an interface to splice the fiber optic cables.

4. The joint (101, 301) as in claim 3, wherein the interface is a bulkhead (105) for the joint (101, 103).

5. The joint (101, 301) as in claim 4, wherein the bulkhead (105) is provided with an enclosure (603) when disconnected from the connector (104).

6. The joint (101, 301) as in claim 1, wherein the joint is configured to splice the fiber optic cables (306) to different permutations of fiber optic cable system (304, 305).

7. The joint (101, 301) as in claim 6, wherein the permutation for a 48 fiber cables are one of: 24^{∗}2, 12^{∗}4, 8^{∗}6.

8. The joint (101, 301) as in claim 1, wherein the joint allows to interface with the connector to form one of: split type combination, bridge type combination.

9. A system for splicing fiber optic cables in a subsea environment, the system comprising:
a joint (301) enclosed in an airtight housing, wherein the joint is configured with at least one bulkhead (502) to interface the joint to a connector;
plurality of jumper cables (302) connected to the joint, wherein the jumper cables are connected to the fiber optic cables (306) at each end to facilitate splicing of the fiber optic cables into several fiber optic cables system (304, 305).

10. A system as in claim 9, wherein the jumper cables (302) are configured to be connected to plurality of the connectors (303b, 303c) via an interface to splice the fiber optic cables.
